# EUROPEAN PATENT APPLICATION

(11) **EP 1 400 570 A1**
(43) Date of publication of application: **24.03.2004**
(21) Application number: 02728143.5
(22) Date of filing: 24.05.2002
(51) Int. Cl.: C08L 81/02, C08L 101/00, C08K 7/04, C08K 3/00, G02B 26/10

(54) **RESIN COMPOSITION FOR OPTICAL PARTS AND OPTICAL PARTS**

(30) Priority: 29.05.2001 JP 2001159950
(71) Applicant: IDEMITSU PETROCHEMICAL CO., LTD., Tokyo 130-0015 (JP)
(72) Inventor: OKUYAMA, Kazuhiro, Ichihara-shi, Chiba 299-0107 (JP)
(74) Representative: Gille Hrabal Struck Neidlein Prop Roos
(86) International application number: PCT/JP2002/005059
(87) International publication number: WO 2002/096991

(57) **Abstract**

A resin composition which comprises (A) a polyarylene sulfide, (B) an amorphous resin, (C) a non-fibrous inorganic filler and (D) a fibrous inorganic filler, wherein the volume proportion of the sum of the components (A) and (B) to the total of the resin composition is 30 to 70 vol%; the mass ratio of the component (A) : the component (B) is 0.65 to 0.95 : 0.35 to 0.05, and the volume proportion of the component (D) to the total of the resin composition is 3 to 25 vol% and optical parts prepared by forming the resin composition. The resin composition is highly useful as a material for forming an optical part that minimizes deviation of the optical axis of an optical system due to temperature change.

## Description

### TECHNICAL FIELD

The invention relates to a resin composition for optical parts, and optical parts made thereof, and particularly relates to a resin composition for optical parts suitable as a molding material of optical housings for optical pickup devices and the like, and optical parts molded of the resin composition that enable minimized deviation of an optical axis.

### BACKGROUND ART

In an optical pickup device, laser printer or copier, particularly, a high-speed color copier, a light beam is conventionally used for recording or reproducing information on or from the recording surfaces of optical discs such as compact discs and digital versatile discs. Optical housings of the above devices have been produced by metal die-casting using aluminum, zinc and the like. Recently, a need has been felt to reduce the weight such housings and, therefore, production from synthetic resins has been examined. For example, Japanese Patent Kokai H10(1998)-293940 proposes a resin composition with a high coefficient of thermal conductivity comprising a polyarylene sulfide and inorganic filler, and a container for an optical pickup device molded of the composition that lowers deviation of the optical axis and offers high thermal resistance and size stability.

However, the memory capacity of such optical discs has increased and a need has arisen for recording to writable compact-disc-recordable (CD-R), compact-disc-rewritable (CD-RW), digital-versatile-disc-random-access-memory (DVD-RAM) and the like. As a result, it is required to increase both the recording density and the laser output. Further, optical pickup devices are coming to be frequently used at higher temperatures, for example, at 50°C or higher, and even 70°C or higher. If optical housings made of conventional polyarylene sulfide resin compositions are used at such high temperatures, deviation of optical axis due to temperature changes increases, thereby causing troubles in recording on or reproduction from optical discs.

A need has therefore arisen for a molding material and optical parts molded thereof by which increases in the deviation of the optical axes of optical systems can be suppressed even at higher temperatures than heretofore, e.g., at 70 to 110°C.

An object of the invention is to provide a resin composition and optical parts molded thereof whereby the deviation of the optical axis of an optical system caused by temperature changes is small.

Through an in-depth study for overcoming the foregoing problem, the inventors learned that this object can be effectively attained by reducing the anisotropy of the coefficient of linear expansion of resin components in a resin composition for optical parts. The invention has been made based on this finding.

### Summary of the Invention

The aspects of the invention are as follows:
[1] A resin composition for an optical part comprising:
   (A) a polyarylene sulfide with a melt viscosity of 50 to 350 poise at a resin temperature of 300°C and a shear rate of 1000 sec⁻¹;
   (B) an amorphous resin with a glass-transition temperature of 180°C or higher;
   (C) a non-fibrous inorganic filler; and
   (D) a fibrous inorganic filler;
   wherein the volume proportion of the sum of the components (A) and (B) to the total of the resin composition is 30 to 70 vol%; the mass ratio of the component (A) : the component (B) is 65 to 95 : 35 to 5; and the volume proportion of the component (D) to the total of the resin composition is 3 to 25 vol%.
[2] The resin composition of [1], wherein the component (B) is one or two or more amorphous resins selected from the group consisting of polyphenylene ether, polysulfone, polyethersulfone, polyetherimide and polyallylate.
[3] The resin composition of [1], wherein the component (C) is silica, calcium carbonate or mixture thereof.
[4] The resin composition of [1], wherein the component (D) is one or two or more fibrous inorganic fillers selected from the group consisting of glass fibers, carbon fibers and whisker-like fillers.
[5] An optical part molded of the resin composition of any one of [1] to [4].
[6] The optical part of [5], which is an optical housing of an optical pickup device, a laser printer or a copier.

### Brief Description of the Drawings

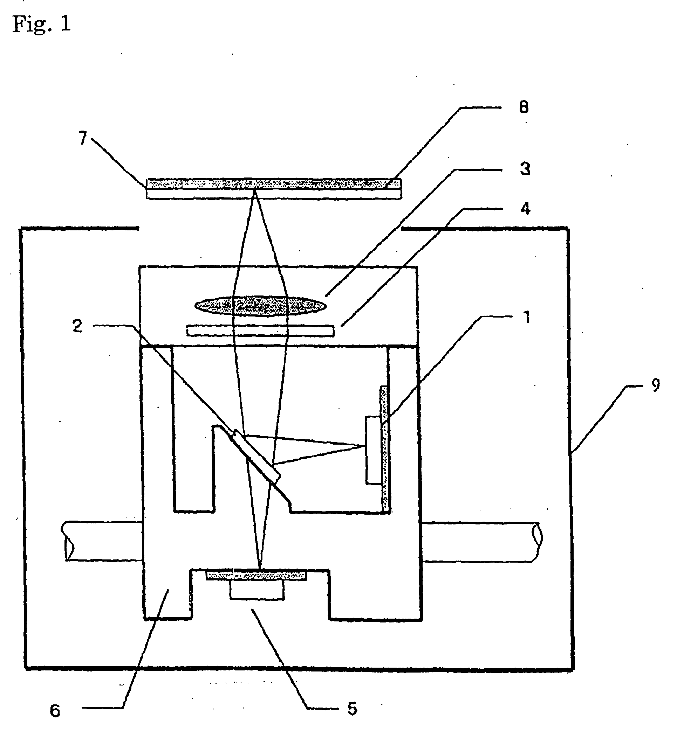

Fig. 1 is a side sectional diagram showing an optical pickup device having an optical pickup base formed in Example 1 mounted therein.

### Best Mode for Carrying Out the Invention

The resin composition for an optical part of the present invention comprises (A) a polyarylene sulfide with a melt viscosity of 50 to 350 poise at a resin temperature of 300°C and a shear rate of 1000 sec⁻¹; (B) an amorphous resin with a glass-transition temperature of 180°C or higher; (C) a non-fibrous inorganic filler; and (D) a fibrous inorganic filler; wherein the volume proportion of the sum of the components (A) and (B) to the total of the resin composition is 30 to 70 vol%; the mass ratio of the component (A) : the component (B) is 65 to 95 : 35 to 5; and the volume proportion of the component (D) to the total of the resin composition is 3 to 25 vol%. These components (A), (B), (C) and (D) will be described below.

### (A) Polyarylene Sulfide

A polymer containing 70 mol% or more of repeat units of the formula [1] can be used as the polyarylene sulfide (A).

―Ar―S― [1]

wherein Ar represents an arylene group. Polyarylene sulfides containing the repeat units in an amount less than 70 mol% may have insufficient heat resistance and mechanical strength. The arylene groups include phenylene, biphenylene and various naphthylene groups, preferably phenylene group (polyphenylene sulfides).

The polyphenylene sulfides preferably contain 70 mol% or more of repeat units represented by the formula [2] 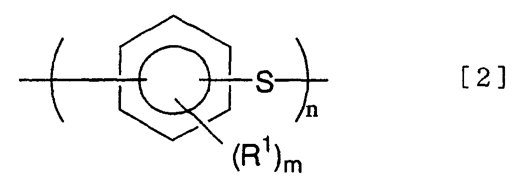 wherein R¹ is a halogen, C₁₋₆ alkyl, C₁₋₆ alkoxy, pheny, carboxyl, amino or nitro; m is an integer of 0 to 4; and n, which is an average polymerization degree, is a natural number of 10 or greater. C₁₋₆ alkyl groups include methyl, ethyl, and various types of propyl, butyl, pentyl and hexyl. C₁₋₆ alkoxy include methoxy, ethoxy, and various types of propoxy, butoxy, pentyloxy and hexyloxy.

These polyphenylene sulfides preferably contain p-phenylene sulfide units as a basic repeat unit. However they may also contain, as a basic repeat unit, m-phenylene sulfide units, o-phenylene sulfide units, p,p'-diphenylene ketone sulfide units, p,p'-diphenylene sulfone sulfide units, p,p'-biphenylene sulfide units, p,p'-diphenylene ether sulfide units, p,p'-diphenylene methylene sulfide units, p,p'-diphenylene cumenyl sulfide units, various naphthyl sulfide units and the like.

The polyarylene sulfides may be used which are produced by ordinary condensation polymerization of a dihalogeno-aromatic compound and a sulfur source in an organic solvent. The polymer chain may be of substantially linear structure without branches or cross-linkages, or of a structure with branches or cross-linkages formed by the addition of a small amount of monomers having 3 or more of functional groups in the course of preparation.

Although polyarylene sulfides with various chemical structures can be used as stated above, they are required to have a melt viscosity of 50 to 350 poise at a resin temperature of 300°C and a shear rate of 1000 sec⁻¹. If the melting viscosity is less than 50 poise, the mechanical strength becomes lower. If the melting viscosity is more than 350 poise, the fluidity of a resin composition containing the polyarylene sulfide at the time of molding becomes lower and the size precision is therefore degraded, resulting in large deviation of the optical axis of the optical system. The melting viscosity is preferably from 50 to 300 poise, more preferably from 50 to 250 poise.

### (B) Amorphous Resin

The amorphous resin used in the composition of the invention as the component (B) is required to have a glass-transition temperature of 180°C or higher. If a resin with a glass-transition temperature lower than 180ºC is used, an optical part formed of the composition containing the resin may be deformed when removing the optical part from a die after injecting the composition. The amorphous resin preferably has a glass-transition temperature of about 280°C or lower, which is in the range of melting points of polyarylene sulfides, since this enables the resin to melt and mix when preparing the composition.

The crystallinity of the amorphous resin is preferably low, less than 20%, more preferably less than 10%. If the crystallinity exceeds 20%, the volume of the resin changes markedly between the molten state and the solid state, resulting in a larger contraction ratio. If an optical part is made of a composition containing such resin as the component (B), the size precision is reduced. Further, the amorphous resin preferably has a melt viscosity similar to that of the polyarylene sulfide at the time of molding the resin composition so as to achieve excellent dispersibility.

The amorphous resins include polysulfone, polyphenylene ether, polyethersulfone, modified polyphenylene ether, polyallylate, polyetherimide and mixtures thereof. Among these, polysulfone and polyphenylene ether are particularly suitable for use.

### (C) Non-Fibrous Inorganic Filler

The non-fibrous inorganic fillers used in the resin composition of the invention as the component (C) include silicates such as sericite, kaolin, mica, clay, bentonite, talc and alumina silicate; matallic compounds such as alumina, silicon oxide, magnesium oxide, zirconium oxide, titanium oxide and iron oxide; carbonates such as calcium carbonate, magnesium carbonate and dolomite; sulfates such as calcium sulfate and barium sulfate; glass beads; ceramic beads; boron nitride; silicon carbide; calcium phosphate; silica; graphite and carbon black. Among these fillers, silica is particularly preferred, since silica can reduce the linear expansion and anisotropy of a composition for optical parts in which it is contained.

Materials usually added to resins as a reinforcement can be used as the non-fibrous inorganic filler. When adding the non-fibrous inorganic filler to the component (A) or (B), the filler is preferably pre-treated with a silane type coupling agent, a titanate type coupling agent or the like to enhance the mechanical strength of the resin composition.

### (D) Fibrous Inorganic Filler

The fibrous inorganic fillers used in the resin composition of the invention as the component (D) include glass fibers, carbon fibers, alumina fibers, silicon carbide fibers, ceramic fibers, asbestos fibers, gypsum fibers, metallic fibers, potassium titanate whiskers, zinc oxide whiskers, calcium carbonate whiskers, wallastonite and asbestos. Among these fillers, glass fibers, carbon fibers and whisker-like fillers are particularly preferred. Glass fibers having a diameter of 5 to 20 µm are preferable. Among whisker-like fillers, zinc oxide whisker is particularly preferred.

Next, the content ratios of the above components will be explained. The volume proportion of the sum of the components (A) and (B) to the total of the resin composition, [(A)+(B)]/[resin composition], is 30 to 70 vol%. The content ratio of components (A) and (B) is adjusted so that the mass ratio of the component (A) : the component (B) is 65 to 95:35 to 5; the volume proportion of the component (C) to the total of the resin composition is 5 to 67 vol%; and the volume proportion of the component (D) to the total of the resin composition is 3 to 25 vol%.

The ratio of the components (A) and (B) is defined as 30 to 70 vol% because a composition whose fluidity is suitable for molding may not be obtained if the volume proportion of [(A)+(B)] is less than 30 vol%; whereas deviation of the optical axis of the optical part molded of the composition becomes large if the volume proportion exceeds 70 vol%. In the invention, the composition ratios of the resin component [(A)+(B)] and filler component [(C)+(D)] are specified by volume proportion because deviation of the optical axis of an optical part molded of the resin composition correlates with the volume proportions rather than the mass ratios thereof. This volume proportion is calculated by dividing the masses of the components (A) and (B) by their densities measured at 25°C in the atmosphere.

Component (A) : component (B) is defined as 65 to 95 : 35 to 5 because the fluidity of the resin composition may be lowered if the content of component (A) is less than 65 mass%; whereas deviation of the optical axis of the optical part molded of the composition may become large if it exceeds 95 mass %.

Further, the volume proportion of the sum of the filler components [(C)+(D)] in the resin composition to the total of the resin composition is defined as 70 to 30 vol%. The fibrous inorganic filler (D) must be contained in a volume proportion of 3 to 25 vol% to the total of the resin composition. The mechanical strength of the optical part molded of the composition may be insufficient if the proportion of the component (D) is less than 3 vol%; whereas deviation of the optical axis of the optical part molded of the composition becomes large if it exceeds 25 vol%. This deviation of optical axis of optical part will be exhibited as deviation of the optical axis of the laser due to positional deviation of the individual components constituting the optical housing of the optical part, which positional deviation is caused by temperature change based on the absolute values of the thermal expansion and anisotropy of the components. Thus in order to suppress deviation of the optical axis of the optical part, it is important to reduce the absolute values of the thermal expansion and anisotropy of the components constituting the optical housing.

The kind and content of the fibrous inorganic filler (D) must be selected from this viewpoint. For example, a resin composition for an optical part having excellent mechanical strength can be easily obtained by incorporating glass fiber at a high content, since such resin composition containing glass fiber has a linear expansion with relatively small anisotropy. However, a resin composition containing carbon fiber has a linear expansion with relatively large anisotropy. Thus, the content of carbon fiber is desirably 15 vol% or less to reduce deviation of the optical axis of the optical part. Even if the carbon fiber content is reduced, the composition can be used to form an optical part with practically sufficient mechanical strength, since the carbon fiber significantly improves the properties of the composition, particularly its stiffness. The content of component (D) can be determined in such a way. Once the content of component (D) is determined, the content of component (C) can be determined as the difference between the total content and the content of (D) within the range of 5 to 67 vol%.

The composition of the invention can contain additives in addition to the components (A) to (D). Such additives include heat stabilizers, antioxidants such as hindered phenol, hydroquinone and phosphite, and ultraviolet ray absorbent agents such as resorcinol, salicylate, benzotriazole and benzophenone. The composition can also contain various additives ordinarily used for synthetic resins such as an antistatic agent, flame retarder, nucleating agent, mold release agent or pigment in a proper amount.

The composition of the invention is prepared by melting and mixing the above components (A) to (D) and the additives with a mixer or kneading machine ordinarily used for mixing polyarylene sulfide or the like to form a uniform resin composition. An optical part can be produced using the thus-obtained resin composition by molding the composition using a known method such as injection, extrusion, solvent molding, pressing molding or thermal molding. Among these methods, injection is preferred because of excellent productivity and size precision of the molded products.

The optical parts thus obtained in accordance with the invention include optical housings of optical pickups used for storage and reproduction of information onto and from recording surfaces of media such as the CD, CD-R, CD-ROM, CD-RW, DVD, DVD-R, DVD-ROM and DVD-RAM; and optical housings and chaises of laser printers and copiers. The optical parts according to the invention enable deviation of the optical axis of a laser to be suppressed to within an allowable range, even if the optical part is required to be used in an environment of a temperature higher than ordinary, e.g., higher than 70°C, since the optical part is formed of the above resin composition.

### Examples

Next, the invention will be explained concretely with reference to examples, but is not limited thereto.

### [Examples 1 to 11, Comparative Examples 1 to 3]

### [1] Materials for Components

### Component (A)

(a-1) Polyphenylene sulfide [Tosoh Corporation; B100]
   1) Cross-linked type
   2) Melting viscosity [300°C, 1000 sec⁻¹]: 100 poise
   3) Density [25°C, atmospheric pressure]: 1.35
(a-2) Polyphenylene sulfide [Tohpren Co.; LR01]
   1) Linear type
   2) Melting viscosity [300°C, 1000 sec⁻¹]: 100 poise
   3) Density [25°C, atmospheric pressure]: 1.35

### Component (B)

(b-1) Polyphenylene ether [Mitsubishi Engineering-Plastic Corporation]
   1) Material: 2,6-dimethyl-1,4-phenylene ether
   2) Glass-transition temperature: 220°C
   3) Density [25°C, atmospheric pressure]: 1.06
(b-2) Polysulfone [Teijin Amoco Co.; UDEL P1700]
   1) Glass-transition temperature: 190°C
   2) Density [25°C, atmospheric pressure]: 1.24 (Comparison) Polycarbonate [Idemitsu Petrochemical Company Ltd.; TARFLON A2200]

   1) Glass-transition temperature: 150°C
   2) Density [25°C, atmospheric pressure]: 1.20

### Component (C)

(c-1) Calcium carbonate [Shiraishi Calcium Kaisha Ltd.; Whiton P30]
   1) Density [25°C, atmospheric pressure]: 2.75
(c-2) Silica [Denki Kagaku Kogyo Kabushiki Kaisha; FB650]
   1) Density [25°C, atmospheric pressure]: 2.21

### Component (D)

(d-1) Glass fiber [Asahi Fiber Glass Co.; JAFT591]
   1) Fiber diameter: 10 µm
   2) Density [25°C, atmospheric pressure]: 2.55
(d-2) Carbon fiber [Toho Rayon Co., Ltd.; HTA-C6-SRS]
   1) Fiber diameter: 6 µm
   2) Density [25°C, atmospheric pressure]: 1.80

### [2] Preparation of Resin Composition for Optical Part

The components of the above [1] were dry-blended in the contents (mass ratio) shown in Tables 1 and 2. The mixture was then melted and mixed at 330°C using a biaxial extruder [Toshiba Machine Co., Ltd.; TEM35] to obtain pellets of a resin composition for optical parts.

For the composition thus obtained, the volume proportion of the resin component [(A)+(B)] to the total of the composition, the mass ratio of (A):(B), and the volume proportion of the filler component [(C)+(D)] to the total of the composition were calculated based on the densities and content of the above materials. The results are shown in Tables 1 and 2.

### [3] Preparation of Optical Part

The pellets obtained in [2] were molded using a 50-ton injection molding machine [Japan Steel Works Ltd.] at a die temperature of 140°C and an injection molding temperature of 330°C to form an optical pickup base for compact discs.

### [4] Evaluation of Optical Part

### (1) Evaluation of Formability (Size Precision)

The degree of deformation of the optical pickup base prepared in [3] was observed with the naked eye and its size precision was evaluated based on the following criteria.
○ : No or almost not deformation was observed.
× : Deformation was observed and it was difficult to mount the base in an optical pickup device.

### (2) Evaluation of Deviation of Optical Axis

The optical pickup base obtained in [3] was mounted in the optical pickup device shown in Fig. 1, and then the base was evaluated.

In this optical pickup device, a semiconductor laser source 1, a half mirror 2, an objective lens 3 and a light-receiving unit 5 are retained on an optical base 6 mounted in a holding container 9. The semiconductor laser source 1 emits a laser beam. The beam is reflected by the half mirror 2 and passes through a collimator lens 4 to be focused on the recording surface 8 of an optical disc 7 by the objective lens 3. The light reflected from a recording surface 8 passes through the objective lens 3 and collimater lens 4 to the light-receiving unit 5, which thereby obtains data signals and error signals such as a focus error signal. The location of the objective lens 3 and the like can be adjusted based on the error signals. The laser light can be projected onto the entire recording surface of the optical disc 7 by moving the optical pickup base 6, which is coupled to a shaft.

Deviation of the optical axis (angle) of a compact disc in this optical pickup device was measured in the following way. The surface of the half mirror 2 was horizontally fixed. A laser beam was projected at 23°C and its angle of reflection was measured. Next the device was heated to and held at 80°C for 10 minutes. Thereafter a laser beam was again projected to measure its angle of reflection. The difference in angle of reflection between 23°C and 80°C was the deviation of the optical axis (angle, minute). The angles of reflection were measured by a device with non-contact angle measuring mechanism. The resolution of the mechanism was 0.08 minutes.

### (3) Evaluation of Digital Versatile Disc Recording

A digital versatile disc was set in the above optical pickup device [4] and the device was exposed to a temperature of 70°C. Recording and reproduction of the digital versatile disc by a laser beam were evaluated in a state similar to practical use. The evaluation criteria were as follows:
○ : Precise reproduction possible.
× : Reproduction impossible.

The evaluation results of the optical parts are shown in Tables 1 and 2.

**Table 1**

| Example | | | 1 | 2 | 3 | 4 | 5 | 6 | 7 |
|---|---|---|---|---|---|---|---|---|---|
| Content Mass% | (a-1) | Polyphenylene Sulfide | 19 | 19 | 19 | 19 | 19 | 21 | 19 |
| | (a-2) | Polyphenylene Sulfide | 0 | 0 | 0 | 0 | 0 | 0 | 0 |
| | (b-1) | Polyphenylene Ether | 0 | 0 | 0 | 0 | 0 | 0 | 0 |
| | (b-2) | Polysulfone | 4 | 4 | 4 | 4 | 4 | 2 | 7 |
| | Comparison | Polycarbonate | 0 | 0 | 0 | 0 | 0 | 0 | 0 |
| | (c-1) | Calcium Carbonate | 52 | 52 | 62 | 22 | 72 | 62 | 22 |
| | (c-2) | Silica | 0 | 0 | 0 | 40 | 0 | 0 | 40 |
| | (d-1) | Glass Fiber | 25 | 20 | 15 | 15 | 5 | 15 | 15 |
| | (d-2) | Carbon Fiber | 0 | 5 | 0 | 0 | 0 | 0 | 0 |
| Composition | Volume Proportion of Component (%) | | 37.6 | 36.9 | 37.4 | 34.6 | 38.1 | 37.7 | 34.7 |
| | (A)/(B) Mass Ratio | | 83/17 | 83/17 | 83/17 | 83/17 | 83/17 | 91/9 | 70/30 |
| | Volume Proportion of (D)(%) | | 21.3 | 22.6 | 11.8 | 12.7 | 4.3 | 12.9 | 12.7 |
| Evaluation | Formability | | ○ | ○ | ○ | ○ | ○ | ○ | ○ |
| | Deviation of Optical Axis (minute) | | 0.32 | 0.34 | 0.20 | 0.18 | 0.12 | 0.24 | 0.16 |
| | Evaluation of Device | | ○ | ○ | ○ | ○ | ○ | ○ | ○ |

**Table 2**

| Example | | | 8 | 9 | 10 | 11 | (1) | (2) | (3) |
|---|---|---|---|---|---|---|---|---|---|
| Content Mass% | (a-1) | Polyphenylene Sulfide | 21.9 | 19 | 0 | 30 | 19 | 21 | 19 |
| | (a-2) | Polyphenylene Sulfide | 0 | 0 | 19 | 0 | 0 | 0 | 0 |
| | (b-1) | Polyphenylene Ether | 0 | 4 | 0 | 13 | 0 | 0 | 0 |
| | (b-2) | Polysulfone | 1.1 | 0 | 4 | 0 | 4 | 4 | 0 |
| | Comparison | Polycarbonate | 0 | 0 | 0 | 0 | 0 | 0 | 4 |
| | (c-1) | Calcium Carbonate | 22 | 22 | 22 | 22 | 22 | 52 | 22 |
| | (c-2) | Silica | 40 | 40 | 40 | 20 | 20 | 0 | 40 |
| | (d-1) | Glass Fiber | 15 | 15 | 15 | 15 | 35 | 10 | 15 |
| | (d-2) | Carbon Fiber | 0 | 5 | 0 | 0 | 0 | 15 | 0 |
| Composition | Volume Proportion of Component (%) | | 34.8 | 35.8 | 34.6 | 60.0 | 36.0 | 35.7 | 35.8 |
| | (A)/(B) Mass Ratio | | 95/5 | 83/17 | 83/17 | 70/30 | 83/17 | 83/17 | 83/17 |
| | Volume Proportion of (D)(%) | | 12.0 | 11.8 | 12.7 | 10.2 | 28.5 | 25.3 | 11.8 |
| Evaluation | Formability | | ○ | ○ | ○ | ○ | ○ | ○ | × |
| | Deviation of Optical Axis (minute) | | 0.28 | 0.20 | 0.19 | 0.35 | 0.40 | 0.49 | - |
| | Evaluation of Device | | ○ | ○ | ○ | ○ | × | × | - |

### Industrial Utility

The invention provides a resin composition useful as a molding material for optical parts capable of minimizing deviation of the optical axis of an optical system caused by temperature changes, and optical parts molded of the material that are capable minimizing optical axis deviation.

## Claims

1. A resin composition for an optical part comprising:
(A) a polyarylene sulfide with a melt viscosity of 50 to 350 poise at a resin temperature of 300°C and a shear rate of 1000 sec⁻¹;
(B) an amorphous resin with a glass-transition temperature of 180°C or higher;
(C) a non-fibrous inorganic filler; and
(D) a fibrous inorganic filler;
wherein the volume proportion of the sum of the components (A) and (B) to the total of the resin composition is 30 to 70 vol%; the mass ratio of the component (A) : the component (B) is 65 to 95 : 35 to 5; and the volume proportion of the component (D) to the total of the resin composition is 3 to 25 vol%.

2. The resin composition of claim 1, wherein the component (B) is one or two or more amorphous resins selected from the group consisting of polyphenylene ether, polysulfone, polyethersulfone, polyetherimide and polyallylate.

3. The resin composition of claim 1, wherein the component (C) is silica, calcium carbonate or mixture thereof.

4. The resin composition of claim 1, wherein the component (D) is one or two or more fibrous inorganic fillers selected from the group consisting of glass fibers, carbon fibers and whisker-like fillers.

5. An optical part molded of the resin composition of any one of claims 1 to 4.

6. The optical part of claim 5, which is an optical housing of an optical pickup device, a laser printer or a copier.

7. The optical part of claim 5, which is an optical pickup base.
